# EUROPÄISCHE PATENTSCHRIFT

(11) **EP 3 354 444 B1**
(45) Veröffentlichungstag und Bekanntmachung des Hinweises auf die Patenterteilung: **28.04.2021**
(21) Anmeldenummer: 18154236.6
(22) Anmeldetag: 30.01.2018
(51) Int. Cl.: B29C 65/48, B29C 65/36, B29C 65/10, B29C 65/78, B29L 31/30

(54) **VERFAHREN ZUR HERSTELLUNG EINES BAUTEILS**
METHOD FOR PRODUCING A COMPONENT
PROCÉDÉ DE FABRICATION D'UN COMPOSANT

(30) Priorität: 31.01.2017 DE 102017101897
(43) Veröffentlichungstag der Anmeldung: 01.08.2018
(73) Patentinhaber: Deutsches Zentrum für Luft- und Raumfahrt e.V., 51147 Köln (DE)
(72) Erfinder: Ucan, Hakan, 21680 Stade (DE); Zapp, Philipp, 21684 Stade (DE); Akin, Deniz, 21684 Stade (DE); Haschenburger, Anja, 21682 Stade (DE)
(74) Vertreter: Gramm, Lins & Partner Patent- und Rechtsanwälte PartGmbB

(56) Entgegenhaltungen:
- WO-A2-2009/047010

## Beschreibung

Die Erfindung betrifft ein Verfahren zur Herstellung eines Bauteils aus wenigstens zwei miteinander zu verklebenden Bauelementen.

Der Einsatz von Faserverbundwerkstoffen in der Luft- und Raumfahrt sowie in der Automobilindustrie hat sich aufgrund der vorteilhaften Eigenschaft dieser Werkstoffe etabliert. Dennoch sind derartige Faserverbundwerkstoffe nicht frei von Nachteilen. Mit dem Einsatz von Faserverbundhybridwerkstoffen, die neben einem Fasermaterial noch ein weiteres, faserfremdes Material, wie bspw. Metall, aufweisen, können die vorteilhaften Eigenschaften von Faserverbundwerkstoffen mit den vorteilhaften Eigenschaften von isotropen Werkstoffen kombiniert werden, um so die Nachteile jedes einzelnen Werkstoffes unter Umständen ausgleichen zu können.

Ein Faserverbundhybridwerkstoff ist dabei ein Werkstoff, der aus sich abwechselnden Faser- und Metallschichten gebildet wird, wobei die Faserschichten ein Fasermaterial und ein Matrixmaterial aufweisen. Die Fasermaterialien können dabei herkömmliche Fasermaterialien zur Herstellung eines Faserverbundbauteils sein, wie bspw. Glasfasermaterialien oder Kohlenstofffasermaterialien.

Einer der bekanntesten Vertreter von Faserverbundhybridwerkstoffen ist ein glasfaserverstärkter Aluminiumwerkstoff (GLARE), bei dem sich Schichten aus einem Faserverbundwerkstoff und einem Aluminiumwerkstoff abwechseln. Derartige glasfaserverstärkte Aluminiumwerkstoffe werden dabei mittlerweile in der kommerziellen Luftfahrt eingesetzt. Vor allem das verbesserte Einschlag- und Rissverhalten macht den Materialmix dieser Faserverbundhybridwerkstoffe besonders attraktiv für den Bau von Flugzeugrümpfen. Für eine ausreichende Steifigkeit des Rumpfes wird dieser durch die Integration von Versteifungselementen (sogenannten Stringern) verstärkt, wobei die Stringer durch Kleben in Integralbauweise mit dem sogenannten Hautfeld in Verbindung gebracht werden.

Hierfür ist ein mehrstufiger Autoklavprozess notwendig, bei dem zuerst das Hautfeld ausgehärtet und anschließend die Stringer integriert, fixiert und vollständig verklebt werden. Für jeden Schritt ist dabei ein neuer Vakuumaufbau erforderlich, der sehr zeit- und kostenintensiv ist. In der Praxis erfolgt dabei die Integration der Stringer an das Hautfeld über Positionierhilfen in Form von Stiften, die in dem Hautfeld angeordnet und integriert sind. Diese werden nach dem mehrstufigen Autoklavprozess wieder entfernt, was einen weiteren Prozessschritt notwendig macht.

Die Vorbereitung für die Positionierung der Versteifungselemente sowie der mehrstufige Autoklavprozess haben lange Prozesszeiten zur Folge. Besonders die Positionierstifte und -bohrungen gestalten den Prozess sehr aufwendig und komplex, da die Stifte bei der Schalenfertigung integriert werden müssen, im Nachhinein wieder entfernt werden müssen und die Stringer mit Positionierungsbohrungen versehen werden müssen. Die Stifte bilden vor allem für den Vakuumaufbau ein hohes Risiko, da die spitzen Stifte Gefahr laufen, die Vakuumfolie zu beschädigen.

Aus der DE 10 2011 112 520 A1 ist ein Verfahren zur Herstellung eines Faserverbundbauteils bekannt, bei dem zwei Faserverbund-Bauelemente mittels Klebung aneinander gefügt werden sollen. Mit Hilfe einer induktiven Erwärmung wird dabei der Klebwerkstoff erwärmt, um die beiden Faserverbund-Bauelemente aneinander zu fixieren.

Aus der DE 11 2007 000 526 B4 ist ein Verfahren zum Befestigen einer Mutter an einem ein lochaufweisenden Werkstück bekannt, wobei zwischen der Mutter und dem Werkstoff eine Klebverbindung ausgebildet wird.

Aus der DE 10 2012 112 313 A1 ist eine Kraftfahrzeugkarosserie bekannt, bei der Profile aus faserverstärktem Kunststoff mit Leichtmetallknoten verklebt werden.

Aus der WO 2009/047010 A2 ist ein Verfahren zum Verbinden zweier Materialien mittels einer Klebverbindung bekannt, wobei der Klebschicht ein induktiv erwärmbares metallisches Material hinzugefügt wird, welches dann mit Hilfe einer Induktionsvorrichtung erwärmt wird, um so den Klebwerkstoff der Klebschicht thermisch zu aktivieren und ihn auf diese Weise auszuhärten.

Es ist Aufgabe der vorliegenden Erfindung, ein verbessertes Verfahren zur Herstellung eines Bauteils aus wenigstens zwei miteinander zu verklebenden Bauelementen anzugeben, bei dem mindestens ein Bauelement aus einem Faserverbundhybridwerkstoff hergestellt wird.

Die Aufgabe wird mit dem Verfahren gemäß Anspruch 1 erfindungsgemäß gelöst.

Gemäß Anspruch 1 wird ein Verfahren zur Herstellung eines Bauteils aus wenigstens zwei miteinander zu verklebenden Bauelementen vorgeschlagen, wobei gemäß dem Verfahren ein erstes Bauelement aus einem Faserverbundhybridwerkstoff bereitgestellt wird. Der Faserverbundhybridwerkstoff ist dabei aus sich abwechselnden Faser- und Metallschichten gebildet, wobei die Faserschichten ein Fasermaterial und ein Matrixmaterial eines Faserverbundwerkstoffes aufweisen. Hierbei kann es sich insbesondere um elektrisch nicht leitendes Fasermaterial handeln.

Des Weiteren wird wenigstens ein zweites Bauelement bereitgestellt, das mit dem ersten Bauelement mittels einer nicht ausgehärteten Klebschicht zwischen den Bauelementen angeordnet ist oder wird.

So ist es in einer ersten Alternative vorgesehen, dass das erste und das wenigstens zweite Bauelement getrennt voneinander bereitgestellt werden, wobei dann in einem Zwischenschritt das zweite Bauelement mittels einer nicht ausgehärteten Klebschicht an dem ersten Bauelement angeordnet wird, indem das zweite Bauelement an das erste Bauelement gefügt wird und zwischen dem ersten und zweiten Bauelement die nicht ausgehärtete Klebschicht vorgesehen ist. In einer zweiten Alternative werden das erste Bauelement und das zweite Bauelement wie eine bereits gefügte Form bereitgestellt, bei der das zweite Bauelement mittels der nicht ausgehärteten Klebschicht bereits an dem ersten Bauelement angeordnet ist.

Anschließend wird in einem ersten Temperierschritt bzw. Temperierprozess die nicht ausgehärtete Klebschicht in wenigstens einem Teilbereich, vorzugsweise in mehreren lokal begrenzten Teilbereichen temperiert (Vortemperierung), indem eine oder mehrere Metallschichten des Faserverbundhybridwerkstoffs des ersten Bauelementes in diesen vorgegebenen Teilbereichen temperiert wird. Die Temperierung der einen oder mehreren Metallschichten erfolgt dabei derart, dass die Klebschicht wenigstens in den vorgegebenen Teilbereichen eine höhere Flächenhaftung als die nicht ausgehärtete Klebschicht vor der Temperierung erhält, ohne dabei vollständig auszuhärten. Nur so ist es möglich, dass durch eine erhöhte Flächenhaftung das zweite Bauelement an dem ersten Bauelement fixiert wird. Dabei darf der Klebstoff der Klebschicht jedoch nicht vollständig aushärten, da zu diesem Zeitpunkt das Matrixmaterial des Faserverbundhybridwerkstoffes ebenfalls noch nicht ausgehärtet ist und sowohl die Klebstoffschicht als auch das Matrixmaterial des Faserverbundhybridwerkstoffes in einem Prozessschritt gleichzeitig ausgehärtet werden sollen (sogenanntes Co-bonding).

Nach dem ersten Temperierprozess (Vortemperierung) werden dann die so fixierten Bauelemente in einen Ofen eingefahren und in einem zweiten Temperierprozess bzw. Temperierschritt temperiert, sodass sowohl die Klebschicht als auch das Matrixmaterial des Faserverbundhybridwerkstoffes des ersten Bauelementes vollständig während dieses zweiten Temperierprozesses aushärten. Die hierfür notwendige Temperatur, mit der das Matrixmaterial und die Klebschicht in dem zweiten Temperierprozess beaufschlagt werden, ist dabei wesentlich höher als die Temperatur des ersten Temperierschrittes, bei dem in Teilbereichen die Klebschicht temperiert wird.

Mit Hilfe dieses Verfahrens wird es erstmals möglich, insbesondere bei der Herstellung von Flugzeugstrukturen mit Versteifungselementen auf die Fixierstifte zum Fixieren der Versteifungselemente auf dem Hautfeld zu verzichten, da während des Fügens der Versteifungselemente (zweite Bauelemente) auf dem Hautfeld (erstes Bauelement) eine Vorfixierung der Versteifungselemente stattfindet, ohne hierbei das Bauteil in Teilbereichen aushärten zu müssen. Vielmehr kann das gesamte Bauteil dann zusammen in einem einzigen Prozessschritt vollständig ausgehärtet werden, sodass es lediglich eines einzigen Vakuumaufbaus bedarf. Die aus dem Stand der Technik bekannten Nachteile des in der Praxis durchgeführten Herstellungsprozesses entfallen somit.

Dabei haben die Erfinder erkannt, dass durch eine Temperierung der Metallschicht des Faserverbundhybridwerkstoffes eine Temperierung der Klebschicht zwischen dem ersten und dem zweiten Bauelement derart bewirkt werden kann, dass die Flächenhaftung der Klebschicht gegenüber der nicht temperierten Klebschicht erhöht werden kann, um so die Bauelemente aneinander zu fixieren. Eine solche Temperierung einer oder mehrerer Metallschichten des Faserverbundhybridwerkstoffes kann dabei bspw. durch ein Bestromen der Metallschichten in Art einer Widerstandsheizung erfolgen. In einer vorteilhaften Ausführungsform, wie später noch gezeigt, kann dies auch durch induktive Erwärmung realisiert werden.

In einer vorteilhaften Ausführungsform ist der Faserverbundhybridwerkstoff des ersten Bauelementes ein faserverstärkter Aluminiumwerkstoff, insbesondere ein glasfaserverstärkter Aluminiumwerkstoff (auch bezeichnet als GLARE), wie er vermehrt auch in der Luftfahrtindustrie eingesetzt wird. Dabei kann das zweite Bauelement ebenfalls einen solchen Faserverbundhybridwerkstoff aufweisen oder aus einem solchen bestehen oder nur aus einem reinen Metallwerkstoff, bspw. Aluminium.

In einer weiteren vorteilhaften Ausführungsform weist die Klebstoffschicht ein Matrixmaterial als Klebstoff auf, sodass die Klebstoffschicht basierend auf den gleichen Randparametern in dem Ofen in dem zweiten Temperierprozessschritt mit ausgehärtet werden kann. Vorteilhafterweise handelt es sich bei der Klebschicht um ein Matrixmaterial, wie es auch bei dem Faserverbundhybridwerkstoff eingesetzt ist. Hierdurch kann sowohl das Matrixmaterial des Faserverbundhybridwerkstoffes als auch das Matrixmaterial der Klebschicht zwischen dem ersten und dem zweiten Bauelement unter denselben Prozessparametern ausgehärtet werden.

In einer vorteilhaften Ausführungsform werden die Metallschichten des Faserverbundhybridwerkstoffes des ersten Bauelementes in dem ersten Temperierprozessschritt derart temperiert, dass die Klebschicht in dem wenigstens einen Teilbereich auf eine Temperatur zwischen 40° bis 70°C, vorzugsweise zwischen 45° bis 55°C, erwärmt wird. Gerade in diesen Temperaturbereichen erhält ein Matrixmaterial als Klebschicht eine verbesserte Flächenhaftung derart, dass die Bauelemente aneinander fixiert werden können, ohne dass die Klebschicht dabei vollständig ausgehärtet wird. Vielmehr erhöht sich in diesen Temperaturbereichen die Klebrigkeit der Klebschicht, sodass das Bauteil in einen Ofen eingefahren werden kann, ohne dass befürchtet werden muss, dass das zweite Bauelement gegenüber dem ersten Bauelement verrutscht. Nicht vollständig ausgehärtet bedeutet insbesondere einen Aushärtezustand oder Polymerisationszustand oder Vernetzungszustand von weniger als 80 %, vorzugsweise weniger als 50 %, besonders vorzugsweise weniger als 30 %.

In einer weiteren vorteilhaften Ausführungsform wird ein elektromagnetisches Wechselfeld in das erste Bauelement in dem wenigstens einen Teilbereich zur induktiven Temperierung einer oder mehrerer Metallschichten des Faserverbundhybridwerkstoffes des ersten Bauelementes eingestrahlt, wodurch es zu einer Wechselwirkung mit den Metallschichten des Faserverbundhybridwerkstoffes kommt, derart, dass Wirbelströme in den Metallschichten erzeugt und die Metallschichten in diesen Bereichen, in denen das elektromagnetische Wechselfeld in Dickenrichtung eingestrahlt wird, erwärmt werden. Durch die Erwärmung der Metallschichten in diesen Bereichen wird schließlich auch die Klebschicht zwischen dem ersten und dem zweiten Bauelement erwärmt, wodurch die erhöhte Flächenhaftung zum Fixieren des zweiten Bauelementes realisiert wird.

So haben die Erfinder erkannt, dass bei der Verwendung eines glasfaserverstärkten Aluminiumwerkstoffes (GLARE) und einer Induktionsvorrichtung zum Einstrahlen eines elektromagnetischen Wechselfeldes, das eine Leistung von ca. 400 Watt hat, weniger als 5 Sekunden benötigt werden, um die Klebschicht in dem vorgegebenen Teilbereich des Bauteils auf ca. 50°C zu erwärmen, um die beiden Bauelemente aneinander zu fixieren. Es ist daher besonders vorteilhaft, wenn die Einstrahlung des elektromagnetischen Wechselfeldes weniger als 10 Sekunden, vorzugsweise weniger als 5 Sekunden pro Teilbereich erfolgt.

In einer vorteilhaften Ausführungsform wird eine Induktionsvorrichtung bereitgestellt, die einen Induktionsgenerator, eine Induktionsspule sowie einen Konzentrator aufweist, wobei das Einstrahlen des elektromagnetischen Wechselfeldes mit der bereitgestellten Induktionsvorrichtungerfolgt.

Die Erfindung wird anhand der beigefügten Figuren beispielhaft näher erläutert. Es zeigen:
- Figur 1: schematische Darstellung des erfindungsgemäßen Verfahrens in einer Querschnittdarstellung;
- Figur 2: schematische, perspektivische Darstellung des Bauteils.

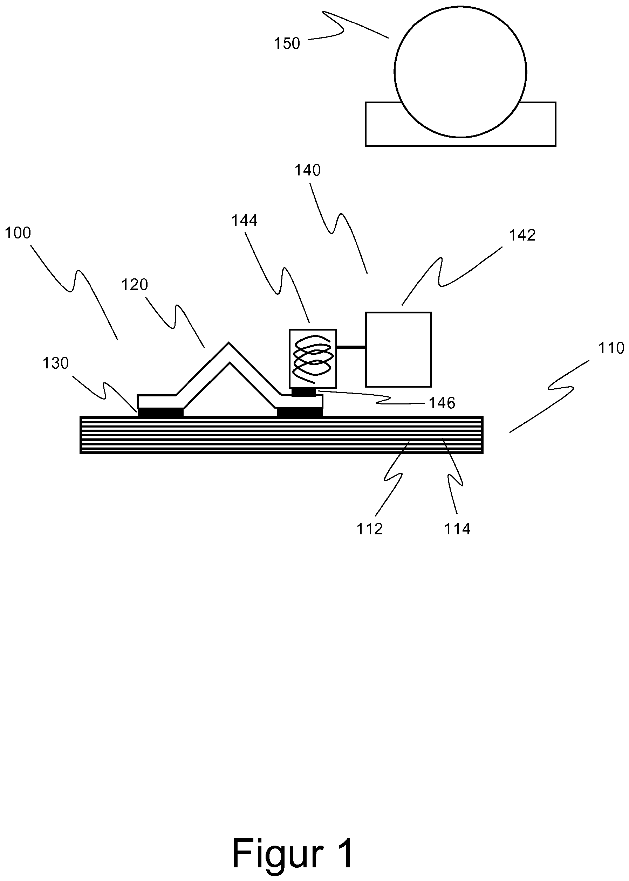

Figur 1 zeigt in einer Querschnittdarstellung ein Bauteil 100, das aus einem ersten Bauelement 110 und einem zweiten Bauelement 120 hergestellt wird. Das erste Bauelement 110 weist dabei einen Faserverbundhybridwerkstoff auf, bei dem sich Faserschichten 112 und Metallschichten 114 abwechseln. An einer Außenseite 116 des ersten Bauelementes 110 wird eine Klebschicht 130 aufgebracht und dann das zweite Bauelement 120 auf das erste Bauelement 110 gefügt. Bei der Klebschicht 130 kann es sich um ein Matrixmaterial handeln, wie es in der Faserschicht 112 des ersten Bauelementes 110 vorgesehen ist.

Bei dem zweiten Bauelement 120 kann es sich bspw. um ein Aluminiumbauteil handeln. Das in Figur 1 abgebildete Bauteil ist eine Flügelschale mit einem Verstärkungselement, wobei das Hautfeld das erste Bauelement 110 darstellt, während das Versteifungselement durch das zweite Bauelement 120 gebildet wird.

Mit Hilfe einer Induktionsvorrichtung 140 wird nun an diskreten Teilbereichen des Bauelementes 110 die Klebschicht 130 derart temperiert, dass sich die Flächenhaftung der Klebschicht 130 in diesem Bereich gegenüber den anderen, nicht temperierten Bereichen erhöht, sodass das zweite Bauelement 120 mit Hilfe dieser Klebschicht 130 zunächst an dem ersten Bauelement fixiert, aber nach wie vor lösbar angeordnet ist.

Anschließend kann das Bauteil 100 in einen Autoklaven 150 eingefahren werden, ohne dass die Gefahr zu befürchten ist, dass das zweite Bauelement 120 gegenüber dem ersten Bauelement 110 verrutscht.

Die Induktionsvorrichtung 140 weist einen Induktionsgenerator 142 auf, der ein Schwingkreis-Induktionsgenerator mit einem Oszillator, der auf der insulated-gate bipolar transistor (IGBT) Technik beruhen kann, auf. Der Induktionsgenerator 142 regt dabei eine Induktionsspule 144 mit einer Wechselspannung an, wobei die Induktionsspule durch ein Gehäuse oder einen Einguss elektrisch isoliert und gegebenenfalls aktiv gekühlt ist. Aufgrund der hohen Leistung sollte die Spule relativ große Abmessungen haben, um nicht zu überhitzen. Die zu verklebenden Versteifungselemente haben sehr kleine Abmessungen. Daher ist ein Konzentrator 146 vorteilhaft, der die magnetischen Feldlinien auf den zu erwärmenden Bereich konzentriert. Die Verwendung des Konzentrators 146 ist eine Sache der Auslegung und stellt hier nur ein Beispiel dar.

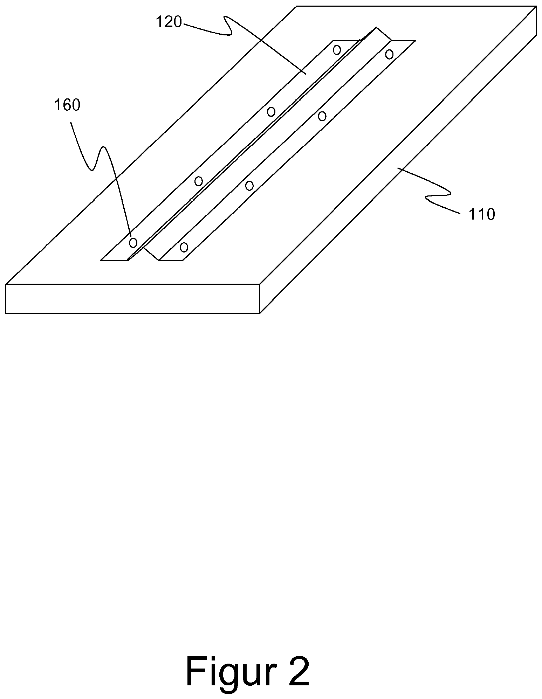

Figur 2 zeigt in einer perspektivischen Darstellung das Bauteil 100, bei dem ein zweites Bauelement 120 an dem ersten Bauelement 110 fixiert wurde. Hierfür wurde an diskreten Teilbereichen 160 jeweils mit Hilfe der Induktionsvorrichtung 140 aus Figur 1 die Klebschicht zwischen dem ersten Bauelement 110 und dem zweiten Bauelement 120 temperiert, sodass in diesem Bereich die Klebschicht eine höhere Flächenhaftung erhalten hat, um so das zweite Bauelement 120 an dem ersten Bauelement 110 zu fixieren.

### Bezugszeichenliste

- 100: Bauteil
- 110: erstes Bauelement
- 112: Faserschicht
- 114: Metallschicht
- 116: Außenseite
- 120: zweites Bauelement
- 130: Klebschicht
- 140: Induktionsvorrichtung
- 142: Induktionsgenerator
- 144: Induktionsspule
- 146: Konzentrator
- 150: Autoklav/Ofen
- 160: Teilbereich

## Patentansprüche

1. Verfahren zur Herstellung eines Bauteils (100) aus wenigstens zwei miteinander zu verklebenden Bauelementen (110, 120), mit den Schritten:
- Bereitstellen eines ersten Bauelementes (110) aus einem Faserverbundhybridwerkstoff, der aus sich abwechselnden Faser- und Metallschichten (112, 114) gebildet ist und bei dem die Faserschichten (112) ein Fasermaterial und ein Matrixmaterial eines Faserverbundwerkstoffes aufweisen,
- Bereitstellen wenigstens eines zweiten Bauelementes (120), das an dem ersten Bauelement (110) mittels einer nicht ausgehärteten Klebschicht (130) zwischen den Bauelementen (110, 120) angeordnet ist oder wird, **gekennzeichnet durch**
- Temperieren der nicht ausgehärteten Klebschicht (130) in wenigstens einem Teilbereich (160), indem eine oder mehrere Metallschichten (114) des Faserverbundhybridwerkstoffes des ersten Bauelementes (110) in zumindest diesem Teilbereich (160) temperiert wird, derart, dass die Klebschicht (130) in diesem Teilbereich (160) eine höhere Flächenhaftung als die nicht ausgehärtete Klebschicht (130) erhält, ohne dabei vollständig auszuhärten, um so das zweite Bauelement (120) an dem ersten Bauelement (110) zu fixieren, und
- Einfahren der fixierten Bauelemente (110, 120) in einen Ofen (150) und Temperieren der fixierten Bauelemente (110, 120) zum vollständigen Aushärten der Klebschicht (130) zwischen dem ersten Bauelement (110) und dem zweiten Bauelement (120).

2. Verfahren nach Anspruch 1, **dadurch gekennzeichnet, dass** der Faserverbundhybridwerkstoff des ersten Bauelementes (110) ein faserverstärkter Aluminiumwerkstoff, insbesondere ein glasfaserverstärkter Aluminiumwerkstoff, ist.

3. Verfahren nach Anspruch 1 oder 2, **dadurch gekennzeichnet, dass** die eine oder mehreren Metallschichten (114) des Faserverbundhybridwerkstoffes des ersten Bauelementes (110) derart temperiert werden, dass die Klebschicht (130) in dem wenigstens einen Teilbereich (160) auf eine Temperatur zwischen 40° bis 70°C, vorzugsweise zwischen 45° bis 55°C, temperiert wird.

4. Verfahren nach einem der vorhergehenden Ansprüche, **dadurch gekennzeichnet, dass** ein elektromagnetisches Wechselfeld in das erste Bauelement (110) in dem wenigstens einen Teilbereich (160) zur induktiven Temperierung einer oder mehrerer Metallschichten (114) des Faserverbundhybridwerkstoffes des ersten Bauelementes (110) eingestrahlt wird.

5. Verfahren nach Anspruch 4, **dadurch gekennzeichnet, dass** eine Induktionsvorrichtung (140) bereitgestellt wird, die einen Induktionsgenerator (142), eine Induktionsspule (144) sowie einen Konzentrator (146) aufweist, wobei das Einstrahlen des elektromagnetischen Wechselfeldes mittels der bereitgestellten Induktionsvorrichtung (140) erfolgt.

6. Verfahren nach einem der vorhergehenden Ansprüche, **dadurch gekennzeichnet, dass** das herzustellende Bauteil (100) ein Flugzeugbauteil ist, bei dem das erste Bauelement (110) eine flächige Flugzeugstruktur ist, an dem eine Mehrzahl von Versteifungselementen als zweite Bauelemente (120) angeordnet und verklebt werden.

## Claims

1. Method for producing a component (100) from at least two structural elements (110, 120) to be adhesively bonded to one another, having the following steps:
- providing a first structural element (110) of a fibre-composite hybrid material, which is formed from alternating fibre and metal layers (112, 114) and in which the fibre layers (112) comprise a fibrous material and a matrix material of a fibre composite material,
- providing at least one second structural element (120), which has been or is arranged on the first structural element (110) by means of an unhardened adhesive layer (130) between the structural elements (110, 120),
**characterized by**
- controlling the temperature of the unhardened adhesive layer (130) in at least one partial region (160) by controlling the temperature of one or more metal layers (114) of the fibre-composite hybrid material of the first structural element (110) in at least this partial region (160) in such a way that the adhesive layer (130) in this partial region (160) obtains a higher degree of surface adhesion than the unhardened adhesive layer (130) without having to be completely hardened in the process, in order thus to fix the second structural element (120) on the first structural element (110), and
- introducing the fixed structural elements (110, 120) into an oven (150) and controlling the temperature of the fixed structural elements (110, 120) to completely harden the adhesive layer (130) between the first structural element (110) and the second structural element (120).

2. Method according to Claim 1, **characterized in that** the fibre-composite hybrid material of the first structural element (110) is a fibre-reinforced aluminium material, in particular a glass fibre-reinforced aluminium material.

3. Method according to Claim 1 or 2, **characterized in that** the temperature of the one or more metal layers (114) of the fibre-composite hybrid material of the first structural element (110) is controlled in such a way that the temperature of the adhesive layer (130) in the at least one partial region (160) is controlled to a temperature of between 40°C and 70°C, preferably between 45°C and 55°C.

4. Method according to one of the preceding claims, **characterized in that** an alternating electromagnetic field is irradiated into the first structural element (110) in the at least one partial region (160) for the purpose of controlling the temperature of one or more metal layers (114) of the fibre-composite hybrid material of the first structural element (110) by induction.

5. Method according to Claim 4, **characterized in that** an induction apparatus (140) is provided, which comprises an induction generator (142), an induction coil (144) and a concentrator (146), wherein the alternating electromagnetic field is irradiated by means of the induction apparatus (140) provided.

6. Method according to one of the preceding claims, **characterized in that** the component (100) to be produced is an aircraft component, in which the first structural element (110) is a planar aircraft structure on which a plurality of stiffening elements as second structural elements (120) are arranged and to which said stiffening elements are adhesively bonded.

## Revendications

1. Procédé de fabrication d'un composant (100) à partir d'au moins deux éléments structurels (110, 120) à coller ensemble, comprenant les étapes consistant à :
- fournir un premier élément structurel (110) en un matériau hybride composite à fibres qui est formé de couches alternées de fibres et de métal (112, 114) et dans lequel les couches de fibres (112) comprennent un matériau de fibres et un matériau de matrice d'un matériau composite à fibres,
- fournir au moins un second élément structurel (120) qui est ou sera agencé sur le premier élément structurel (110) au moyen d'une couche adhésive non durcie (130) entre les éléments structurels (110, 120),
**caractérisé par** les étapes consistant à :
- tempérer la couche adhésive non durcie (130) dans au moins une zone partielle (160) par le fait de tempérer une ou plusieurs couches métalliques (114) du matériau hybride composite à fibres du premier élément structurel (110) au moins dans ladite zone partielle (160), de telle sorte que la couche adhésive (130) dans cette zone partielle (160) obtienne une adhérence de surface plus élevée que la couche adhésive non durcie (130), cependant sans durcir complètement, afin de fixer ainsi le second élément structurel (120) au premier élément structurel (110), et
- introduire les éléments structurels fixés (110, 120) dans un four (150) et tempérer les éléments structurels fixés (110, 120) pour faire durcir complètement la couche adhésive (130) entre le premier élément structurel (110) et le second élément structurel (120).

2. Procédé selon la revendication 1, **caractérisé en ce que** le matériau hybride composite à fibres du premier élément structurel (110) est un matériau à base d'aluminium renforcé de fibres, en particulier un matériau à base d'aluminium renforcé de fibres de verre.

3. Procédé selon la revendication 1 ou 2, **caractérisée en ce que** la ou les couches métalliques (114) du matériau hybride composite à fibres du premier élément structurel (110) sont tempérées de telle sorte que la couche adhésive (130) dans ladite au moins une zone partielle (160) est tempérée à une température comprise entre 40° et 70°C, de préférence entre 45° et 55°C.

4. Procédé selon l'une des revendications précédentes, **caractérisé en ce qu'**un champ électromagnétique alternatif est injecté dans le premier élément structurel (110) dans ladite au moins une zone partielle (160) pour tempérer par induction une ou plusieurs couches métalliques (114) du matériau hybride composite à fibres du premier élément structurel (110).

5. Procédé selon la revendication 4, **caractérisé en ce qu'**il est prévu un dispositif d'induction (140) comprenant un générateur d'induction (142), une bobine d'induction (144) et un concentrateur (146), dans lequel l'injection du champ électromagnétique alternatif est effectuée au moyen du dispositif d'induction (140) prévu.

6. Procédé selon l'une des revendications précédentes, **caractérisé en ce que** le composant (100) à fabriquer est un composant d'avion, dans lequel le premier élément structurel (110) est une structure d'avion surfacique sur laquelle une pluralité d'éléments de raidissement sont disposés et collés en tant que seconds éléments structurels (120).
